# EUROPÄISCHE PATENTSCHRIFT

(11) **EP 0 216 231 B1**
(45) Veröffentlichungstag und Bekanntmachung des Hinweises auf die Patenterteilung: **10.03.1993**
(21) Anmeldenummer: 86112360.2
(22) Anmeldetag: 06.09.1986
(51) Int. Cl.: G02B 6/38, G01J 5/08, G02B 6/36

(54) **Temperaturschockbeständiger faseroptischer Lichtleiter**
Optical fibre waveguide resistant to abrupt changes in temperature
Guide d'onde à fibre optique résistant aux chocs de température abrupts

(30) Priorität: 26.09.1985 DE 3534280
(43) Veröffentlichungstag der Anmeldung: 01.04.1987
(73) Patentinhaber: Schott Glaswerke, 55122 Mainz (DE); Carl-Zeiss-Stiftung trading as SCHOTT GLASWERKE, 55122 Mainz (DE)
(72) Erfinder: Kriege, Wolfgang, Dipl.-Ing., D-6500 Mainz 1 (DE); Bernsee, Gerhard, Dipl.-Ing., D-6500 Mainz 1 (DE); Paschke, Hartmut, Dipl.-Phys. Dr., D-8300 Ergolding (DE)
(74) Vertreter: Fuchs Mehler Weiss

(56) Entgegenhaltungen:
- DE-A- 1 473 226
- DE-A- 2 630 730
- DE-A- 3 247 500
- GB-A- 2 149 936
- US-A- 3 681 164

## Beschreibung

Die vorliegende Erfindung betrifft einen temperaturbeständigen faseroptischen Lichtleiter, dessen Enden unter Verwendung eines Einschmelzmaterials mit einer Hülse aus korrosionsbeständigem Material verschmolzen sind.

Faseroptische Sonden und Lichtleiter werden in vielen Bereichen der Technik zur Übertragung von optischen Meßsignalen eingesetzt. Auf dem Gebiet der Pyrometrie, der Meßsignalverarbeitung in Hochtemperaturräumen sowie der Lichtübertragung mit leistungsstarken Lichtquellen ist der Einsatz von flexiblen faseroptischen Lichtleitern auf Temperaturen < 300°C begrenzt, da die übliche Endenpräparation keine höheren Temperaturen zuläßt.

Es ist auch bereits bekannt (GB-PS 15 56 046 und DE-OS 26 30 730), jedes Ende eines Bündels aus Lichtleitfasern mit Hilfe eines schmelzbaren Materials in eine Hülse einzuschmelzen. Das Einschmelzmaterial dient dort jedoch nur zur Zentrierung und Ankopplung von Lichtleitkabeln für optoelektronische Übertragungssysteme; eine Anpassung der Lichtleiter an eine Anwendung bei erhöhter Temperatur wurde nicht versucht.

Aus der DE-PS 32 47 500 ist es bekannt, durch geeignete Materialien die Lichtleiter temperaturbeständig zu machen. Hierbei werden die verwendeten Materialien so ausgewählt, daß das gesamte System, bestehend aus Hülse, Einschmelzmaterial und optischen Fasern, im gesamten in Frage kommenden Temperaturbereich unter Druckspannung steht. Dies wird dadurch erreicht, daß die Materialien so gewählt werden, daß sie einen von außen nach innen abnehmenden linearen Ausdehnungskoeffizienten besitzen.

Wegen der hohen Temperaturbelastung werden bevorzugt solche Hülsenmaterialien verwendet, die korrosionsbeständig sind, wie z.B. hochlegierte Chrom-Nickel-Stähle. Infolge der hohen thermischen Ausdehnung dieser Stähle und der Verschmelzung zwischen dem Stempel und dem Einschmelzmaterial treten nun im eingeschmolzenen System axiale Zugspannungen auf, die zur Rißbildung, d.h. zur Zerstörung des Lichtleiters führen können. Um dies zu verhindern wurde bereits vorgeschlagen, zwischen dem Einschmelzmaterial und dem Stempel ein Trennmaterial anzuordnen, das sich nicht mit dem Einschmelzmaterial verbindet.

Ein weiteres Problem entsteht jedoch durch die Anglasung dieses Einschmelzmaterials an dieser Hülse. Wird nämlich ein derartiger faseroptischer Lichtleiter schockartig mit Temperatur beaufschlagt (z.B. bei pyrometrischen Messungen in Gasturbinen von 10°C auf > 300°C), so führt die plötzliche Ausdehnung der das eingeschmolzene System umgebenden Metallhülse infolge des Temperaturgradienten zwischen innen und außen zu Zugspannungen im Glassystem, die zur Zerstörung des Lichtleiters führen.

Ziel der Erfindung ist daher ein faseroptischer Lichtleiter, bei dem diese bei schockartiger Temperaturbelastung plötzlich auftretenden Zugspannungen vermieden werden.

Dieses Ziel wird dadurch erreicht, daß zwischen dieser Hülse und diesem Einschmelzmaterial eine Trennschicht angeordnet ist, die eine Anglasung dieses Einschmelzmaterials an der Hülse verhindert.

Aus fertigungstechnischen Gründen wird dieses Trennmaterial auch zwischen der Hülse und dem Preßstempel angeordnet.

Diese Trennschicht besteht vorzugsweise aus Nickel oder Graphit und gewährleistet, daß sich die Hülse bei schockartiger Temperaturbelastung gegenüber dem Einschmelzmaterial ungehindert ausdehnen kann.

Nachfolgend werden beispielhafte Ausführungsformen der Erfindung unter Hinweis auf die Zeichnungen näher erläutert.

Es zeigen:
- Figur 1: einen Längsschnitt durch das Ende des erfindungsgemäßen Lichtleiters
- Figur 2: einen Längsschnitt durch das Ende eines Lichtleiters mit einem Ring zwischen Einschmelzmaterial und Stempel.

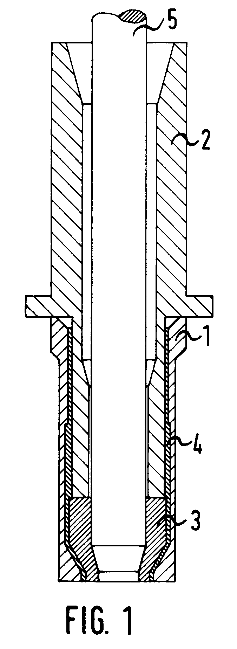

Figur 1 zeigt das Ende eines erfindungsgemäß präparierten Lichtleiters, bei dem das Lichtleitfaserbündel 5 von einem Ring 3 aus Einschmelzmaterial und einem Preßstempel 2 umgeben ist, über die eine Hülse 1 geschoben ist. Zwischen diesem Einschmelzring 3 und dieser Hülse 1 ist eine Trennschicht 4 angeordnet, die sich in dem vorliegenden Beispiel auch zwischen Hülse 1 und Preßstempel 2 erstreckt.

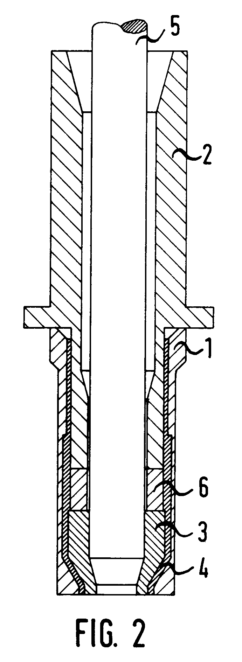

In der Figur 2 ist zusätzlich zwischen Einschmelzmaterial und Preßstempel ein Ring 6 aus Trennmaterial vorgesehen. Die erfindungsgemäße Trennschicht 4 ist hier zwischen der Hülse 1 und dem Einschmelzmaterial 3, dem Ring 6 und dem Preßstempel 2 angeordnet.

## Patentansprüche

1. Temperaturschockbeständiger faseroptischer Lichtleiter, dessen Enden unter Verwendung eines Einschmelzmaterials mit einer Hülse aus korrosionsbeständigem Material verschmolzen sind,
dadurch gekennzeichnet,
daß zwischen dieser Hülse (1) und diesem Einschmelzmaterial (3) eine Trennschicht (4) angeordnet ist, die eine Anglasung dieses Einschmelzmaterials an der Hülse verhindert.

2. Lichtleiter nach Anspruch 1, dadurch gekennzeichnet, daß diese Trennschicht (4) aus Nickel besteht.

3. Lichtleiter nach Anspruch 1, dadurch gekennzeichnet, daß diese Trennschicht (4) aus Graphit besteht.

## Claims

1. Optical fibre waveguide resistant to abrupt changes in temperature, the ends thereof being fused together with a bush of corrosion-resistant material in using a sealing material, characterized in that between the said bush (1) and the said sealing material (3) a separation layer (4) is provided preventing the sealing of the said sealing material at the bush.

2. Waveguide according to claim 1, characterized in that the said separation layer (4) consists of nickel.

3. Waveguide according to claim 1, characterized in that the said separation layer (4) consists of graphite.

## Revendications

1. Conducteur de lumière à fibres optiques résistant aux chocs thermiques dont les extrémités sont scellées dans un manchon en matériau résistant à la corrosion au moyen d'une masse de scellement, caractérisé par le fait qu'une couche de séparation (4) est disposée entre ledit manchon (1) et ladite masse de scellement (3) et empêche une liaison par fusion entre ladite masse de scellement et le manchon.

2. Conducteur de lumière selon la revendication 1, caractérisé par le fait que la couche de séparation (4) est formée de nickel.

3. Conducteur de lumière selon la revendication 1, caractérisé par le fait que la couche de séparation (4) est formée de graphite.
